Europäisches Patentamt

(19) European Patent Office

Office européen des brevets

(11) Publication number: **0 009 378**

**A1**

## (12) EUROPEAN PATENT APPLICATION

(21) Application number: 79301892.0

(22) Date of filing: 14.09.79

(51) Int. Cl.³: **G 06 F 15/20, B 41 B 27/20**

(30) Priority: 14.09.78 JP 113318/78

(43) Date of publication of application: 02.04.80
Bulletin 80/7

(84) Designated Contracting States: DE FR GB IT

(71) Applicant: XEROX CORPORATION, Xerox Square - 020, Rochester New York 14644 (US)

(72) Inventor: **Arai, Yoshio, c/o FUJI XEROX CO., LTD. 2274 Hongo, Ebina-shi Kanagawa-ken (JP)**
Inventor: **Kataoka, Hiroyuki, c/o FUJI XEROX CO., LTD. 2274 Hongo, Ebina-shi Kanagawa-ken (JP)**
Inventor: **Suzuki, Isao, c/o FUJI XEROX CO., LTD. 2274 Hongo, Ebina-shi Kanagawa-ken (JP)**
Inventor: **Yokota, Shozo, c/o FUJI XEROX CO., LTD. 2274 Hongo, Ebina-shi Kanagawa-ken (JP)**

(74) Representative: **Goode, Ian Roy et al, c/o Rank Xerox Limited Patent Dept. Westbourne House 14-16 Westbourne Grove, London W2 5RH (GB)**

(54) Image transcribing apparatus.

(57) A copying system which enables the selection of any portion of an original, the magnification or reduction of the selected portion, and the reproduction of the modified portion at any location on the copy. The system comprises an image input portion (4) for scanning the original, a first memory means (1) for storing the entire image, an image processing portion (3) for selecting a portion of the original image, for magnifying or reducing it, and for determining its position on the final copy, a second memory means (2) for storing the resultant image, and a printing means (5) for printing the image portion on a paper copy or equivalent.

0009378

## IMAGE TRANSCRIBING APPARATUS

This invention relates to an image transcribing apparatus including an image input portion which scans an original to produce electrical image elements, each element comprising one or a plurality of binary bits, an image processing portion for processing the image elements, and a recording portion for reproducing the processed image elements on a copy.

Copying and duplicating machines usually reproduce an entire image from an original to a copy by optical and/or electronic means. These systems may provide a magnification or reduction capability, but none allow the operator to select any portion of the original, enlarge or reduce it, and reproduce it anywhere on the copy. This would be a useful feature in the production of publications where halftone or continuous tone illustrations are positioned on the same page with text.

The present invention as claimed is intended to provide such a selective copying apparatus, with the option of magnification or reduction of the portion selected for copying, and accordingly provides an image transcribing apparatus which is characterised by a first memory for storing the image elements from the input portion and a second memory for storing the elements to be reproduced by the recording portion, the image processing portion being arranged to transfer the image elements stored in the first memory, at locations corresponding to a region of the original to be extracted, into the second memory at locations corresponding to a transcribing region assigned for the reproduced image on the copy.

The image input portion may comprise a CCD array, a laser scanner or any other well known scanning means. Similarly, the output printer may use any laser or optical system, and the first and second page memory portions may be any solid state memory device or equivalent.

The processing portion comprises circuits for storing the addresses defining the boundaries of the original and copy image portions, and for automatically transferring and operating on the image data. Additional aspects of the system are a simple and effecient magnifying/reducing process optimized for use with this system and a simple keyboard for system control.

- 2 -                                    0009378

An apparatus in accordance with the invention will now
be described, by way of example, with reference to the accompanying
drawings, in which:-

Figure 1 is an overall block diagram of the system.

Figure 2 is a diagram showing the extraction and shift of an image
portion.

Figure 3 is a block diagram of the image processing means.

Figure 4 is a detailed block diagram of the first address instruction
circuit.

Figure 5 shows the addressing system for image elements.

Figure 6 is a diagram showing the extraction, magnification and
shift of an image portion.

Figure 7 is the schematic of the image processor means.

Figure 8 is a graph showing the results of the magnification/reduction
process.

Figure 9 is a diagram of the address designation circuit.

Figure 10 is the second page memory address designation circuit.

Figure 11 is the keyboard layout.

Figure 12 is the region designation circuit block diagram.

Figure 13 is a block diagram of one frequency divider.

Figure 14 is a block diagram of the remaining frequency dividers.

Figure 15 is an exploded view of the platen and its illumination.

Figure 16 is a means for holding the copy and for defining the
transcription region.


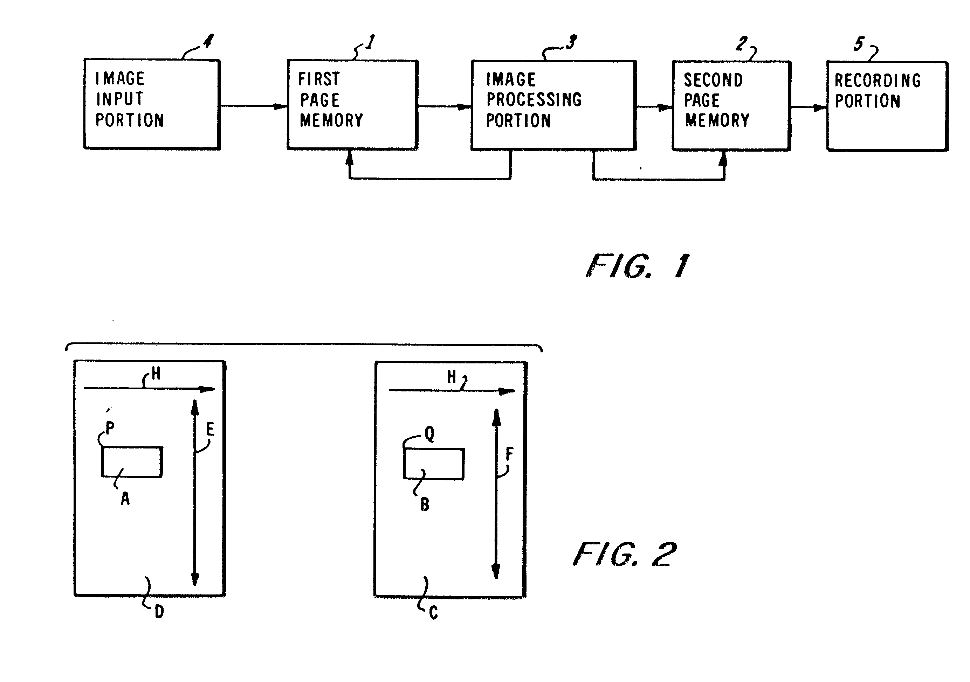

Figure 1 is a schematic block diagram of this invention, and Figure
2 is a diagram showing the principle of this invention.  As shown in Figure
1, the transcribing device of this invention comprises an image input portion
4 for converting an original document image into an image signal, a first
page memory 1 for storing the input original image information, an image
processing portion 3 which extracts from the original image information the
portion that corresponds to the determined extraction region A of Figure
2 and performs the magnifying or diminishing process as required, a second
page memory 2 for transferring and storing the original image information
to reproduce the above image on a desired transcription region B of Figure 2 on a copy and a recording portion 5 for reading out the contents of the second page memory 2 and reproducing it on paper. No particular explanation will be given for the image input portion 4 and the recording portion 5 since any well-known means may be used for them.

The first page memory 1 is a memory means having a capacity for storing the original image information corresponding to at least that contained in one page of the document. Preferably, all of the original pages are stored in the first page memory 1 successively in accordance with the order in which they are recorded.

For each of the image elements of the original image, it is assumed here that binary image information expressive of black or white status is stored successively from the top address in the first page memory 1 in accordance with the scanning order. Among the original image information stored in the first page memory 1, only the image information corresponding to the extraction region (A in Figure 2) to which the address is designated by the image processing portion 3 is read out and input to the image processing portion 3.

For the image information corresponding to the extraction region A, a magnifying or diminishing process is performed in the above image processing portion 3 as required. The image information corresponding to the extraction region of the image information subjected to the above process as required is sent out to the second page memory 2. The second page memory 2 is a memory means similar to the first page memory 1 and has a capacity for storing image information to be reproduced (recorded) at least corresponding to that contained in one page of the copy. The image information sent out from the image processing portion 3 is stored at the address in the page memory 2 designated by the image processing portion 3. As will be explained below, the image processing portion 3 designates the address corresponding to a transcribing region B on the copy.

In this manner, the information for the image corresponding to the extraction region A of the total original image D of Figure 2 or the information for this image magnified or diminished from the above image is stored in the second page memory 2 at the address corresponding to the transcription region. If there are two or more extraction regions on the original image, the foregoing operation may be repeated. Upon completion of all of the writing operations into the second page memory 2 for the image information to be copied, the information stored in the second page memory 2 is sequentially read out from the top address and sent to the recording portion 5. The recording portion 5 reproduces the desired image in the transcribing position B on the recording paper C in accordance with the image information sent to it. While the means for the successive reading of the image information from the second page memory 2 is not shown, no particular description will be required since there are many well known means for reading from memory.

A detailed description will now be made of the construction and operation of the image processing portion 3.

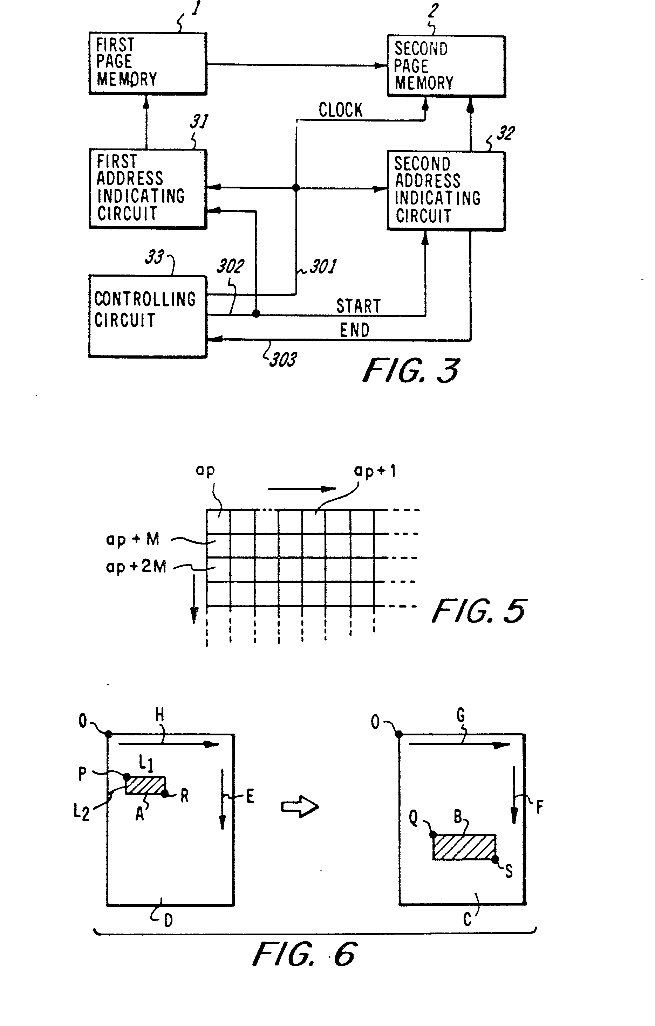

Figure 3 shows a block diagram for an image processing means adapted to perform the processes of extracting the image information corresponding to the extraction region A from the first page memory 1 and transferring the above image information into the second page memory 2 at the address corresponding to the transcription region B. First, the initial address of the original extraction region A is determined by the first address indicating circuit 31 and the first address of the transcribing position B is determined by the second address indicating circuit 32. Then, by the delivery of a start pulse on line 302 from a control circuit 33, every clock pulse on line 301 from the control circuit 33 will produce a data transfer. The clock pulses 301 also write enable the second page memory 2.

Consequently, for every clock pulse 301 from the control circuit 33, information stored in the first page memory 1 at the address designated by the first address instruction circuit 31 is read out to the second page memory 2 and written into the address designated by the second address instruction circuit 32. When all of the image information corresponding to the extraction region A has been transferred to the second page memory 2, an end signal 303 is supplied from the address instruction circuit 32 to the control circuit 33, whereby the control circuit 33 terminates the delivery of clock pulses.

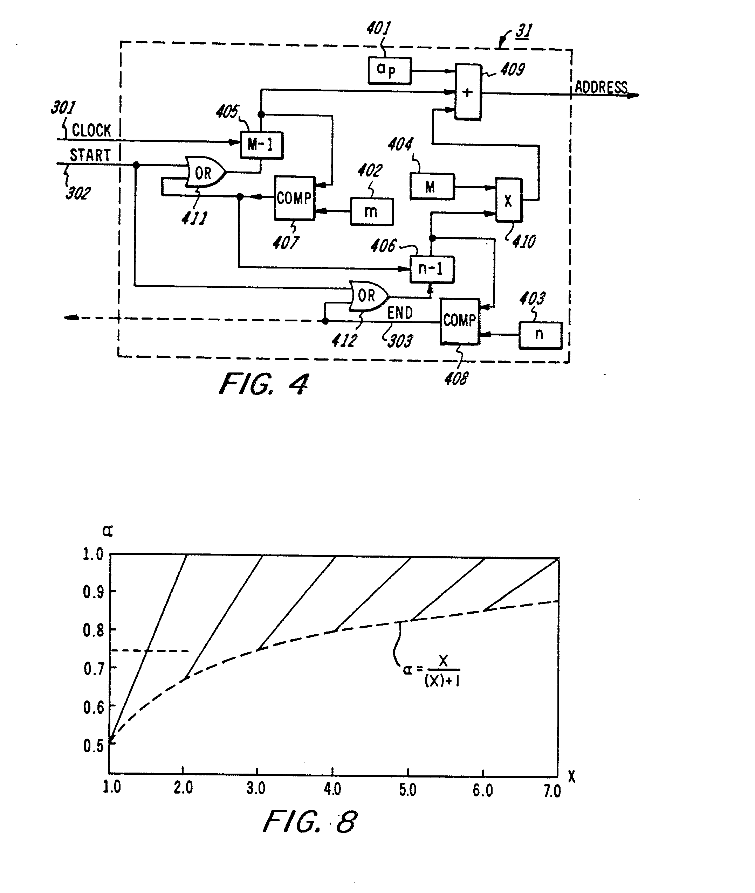

Figure 4 is a detailed block diagram of the first address instruction circuit 31 in Figure 3. The operation is to be described for the case where neither magnification nor diminishing is conducted, as shown in Figure 2.

The following explanation is based on the following assumptions, as illustrated in Figure 2

(Assumption 1)

The original document D of Figure 2 and the recording paper C are the same size and consist of a number, M, of image elements in the direction of the arrow H, and a number, N, of image elements in the direction of the arrow E respectively. Accordingly, the image of the original document D is defined by M x N information elements. The image to be recorded on the entire copying paper C is also defined as M x N elements.

(Assumption 2)

The arrows H and G coincide with the main scanning direction and E and F coincide with the auxiliary scanning direction respectively. The information for each of the image elements in each of the page memories is successively stored with respect to the image elements arranged in the direction of the arrow H (a part, or the entire portion, be referred to as the image element row) and are successively stored, in rows, in the direction of the arrow E.

(Assumption 3)

The extraction region A and the transcription region B are rectangular regions each consisting of m image elements in the direction of the arrows H and G, and n image elements in the direction of the arrows E and F. Each element comprises k bits. Therefore, the number of bits per row $M' = k M$. Similarly, $N' = kN$, $m' = km$ and $n' = kn$.

(Assumption 4)

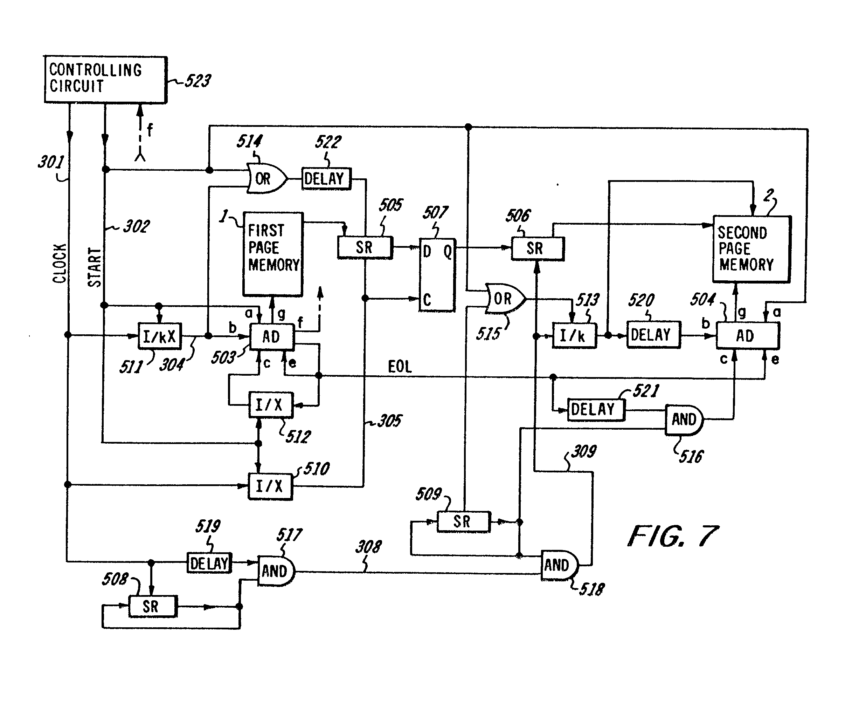

The image element P on the extraction area A in Figure 2 and the image element Q on the transcription region B are the upper left image segment elements. The image element P is stored in the k bit memory location designated by the address "ap" of Figure 5 and the information corresponding to the image element Q is stored in the memory location designated by the address "aq", not shown. Since the information input or output is carried out by the k bit unit in the page memory according to assumption 3, the designation for the address ap or aq results in the input and output of k bits.

In Figure 4, registers 401, 402, 403 and 404 are for the indication of numerical values showing the position and the size of the extraction region A, in which the register 401 indicates the address ap of a memory location which stores the information corresponding to the image element P of the extraction region A, the register 402 indicates the number m of addresses required for the input and output of the information corresponding to the number of image elements arranged in the extraction region A in the direction of the arrow H, the register 403 indicates the number n of the image elements in the extraction region A in the direction of the arrow E and the register 404 indicates the M number of the address designation required for the input and output of the information corresponding to the M number of image elements with respect to one image element row.

Counters 405 and 406 are for counting input pulses and adapted to count up to M-1 and N-1 respectively. Devices 407 and 408 are comparators adapted to compare the values counted by counters 405 or 406 with the values set in registers 402 or 403 to generate pulses when the values coincide. Device 409 represents an adder which produces the address to be designated for the first page memory 1. Device 410 is a multiplier for indicating the product of the value indicated on the register 404 and the value indicated on the counter 406. Devices 411 and 412 are OR circuits.

Upon input of the start pulse 302, the counter 405 displays 0 as an initial value. Thereafter, on every arrival of the clock pulse 301, the counter 405 counts and sends the results to the adder 409. Since the adder 409 is simultaneously supplied with the output of the multiplier 410 and the value set by the register 401, it issues the addition which is the address of an original document element in the first page memory. When the start pulse 302 is supplied, since both of the counted values on the counter 405 and the counter 406 are 0 and, accordingly, the output from the multiplier 410 is 0, register 401 produces the address designated as ap.

Thereafter, upon every input of the clock pulse 301 to the counter 405, the counter 405 counts up, and addresses ap+1, ap+2, ap+3 are produced. In addition, the value indicated on the counter 405 is also supplied to the input of the comparator 407 and the comparison is taken with the other input to the comparator 407, that is, the value m set on the register 402. When both of the values coincide, the comparator 407 issues a pulse. The pulse signal is coupled by way of the OR circuit 411 to the counter 405 to reset the value indicated on the counter 405 to 0 and is also coupled to the counter 406 to increase the value indicated by the counter 406 by 1. The result is input to the multiplier 410 where the product with the value M indicated on the register 404 is determined. Consequently, the multiplier 410 changes its output from 0 to M. Since this value is supplied to the input of the adder 409, the adder 409 issues an output, that is, an address of ap+M. As apparent from the foregoing, the multiplier 410 increases its output by M on the completion of every row of m elements. At the end of each row, counter 406 is incremented. Then, when the comparator 408 determines that the counter 406 value is equal to the content indicated on the register 403, it sends out a signal indicating the completion of the extraction process for region A.

The first address indicating circuit 31 shown in Figure 4, is similar to the second address indicating circuit 32 although the content indicated on the register 401 would be aq and the address designation end signal 303 would be externally transferred and supplied to the control circuit 33. This will be apparent from the fact that the operation of these transfer circuits is a mere transcribing operation for transferring the configuration of the extraction region A on the original document D with no modification to the copy region B on the recording paper C resulting in no changes in the number and the arrangement of the image elements, that the numbers of the image elements constituting the original document D and the recording paper C are equal, and that the information corresponding to these image elements are stored in each of the page memories in accordance with the sequence as described above.

While the explanation has been made for transcribing the image in the extraction region on the original to the desired position on the copy as it is, that is, at a magnification factor of 1, magnification and diminishing of the image may be required upon such transcription. Such a case now will be described. Figure 6 is a conceptional view of the process of extracting the image information corresponding to the extraction region from the first page memory, processing the information so as to magnify or diminish it at a specified ratio (hereinafter referred to simply as magnification) and storing the image information corresponding to the copy region obtained by the above process into the second page memory at the designated address different from its position on the original. Figure 7 is a block diagram of

-8-

the device for carrying out this process.

Figure 6 shows the result of magnifying the image corresponding to a region A of the original D, and reproducing it on the copy C as region B.

Generally, there is an infinite number of magnifying ratios. Even if limited to a 0.05, pitch, as 0.05, 0.10, ......... the number is still too large. It is thus necessary to provide a method of decreasing the number of ratios.

The following equation forms a basic solution therefor. For the ratio x greater than 1, it is generally expressed as $x = ([x] + B) \cdot \alpha$ and $\alpha = x/([x] + B)$, where $\alpha$ is a correction coefficient, (x) is an integer part of x, that is, the greatest integer not exceeding x and B is a natural number. Since it is advantageous in terms of probabilities to set (x) + B smaller for magnifying the image with a fidelity as high as possible, the above equation is rewritten as follows setting B as 1:

$$x = ([x] + 1) \cdot \alpha$$

$$x = \frac{x}{[x] + 1}$$

Since $[x] = 3$ for $x = 3.33$, for example, $3.33 = 4 \cdot \alpha$, and $\alpha = 0.825$, magnification by the factor of 3.33 is equivalent to magnification by the factor of 4 and a further magnification by the factor of 0.8325. Since the magnification by the factor of an integer is a common practice, the point is to provide a process of magnifying by the factor of $\alpha$.

The value for $\alpha$ is represented below:

(i)   when $0 < x < 1$; $\alpha = x$ and $0 < \alpha < 1$

(ii)  when $1 < x < 2$; $\alpha = \frac{x}{2}$ and $1/2 < \alpha < 1$

      when $n < x < n + 1$; $\alpha = \frac{x}{n+1}$ and $\frac{1}{n+1} < \alpha < 1$

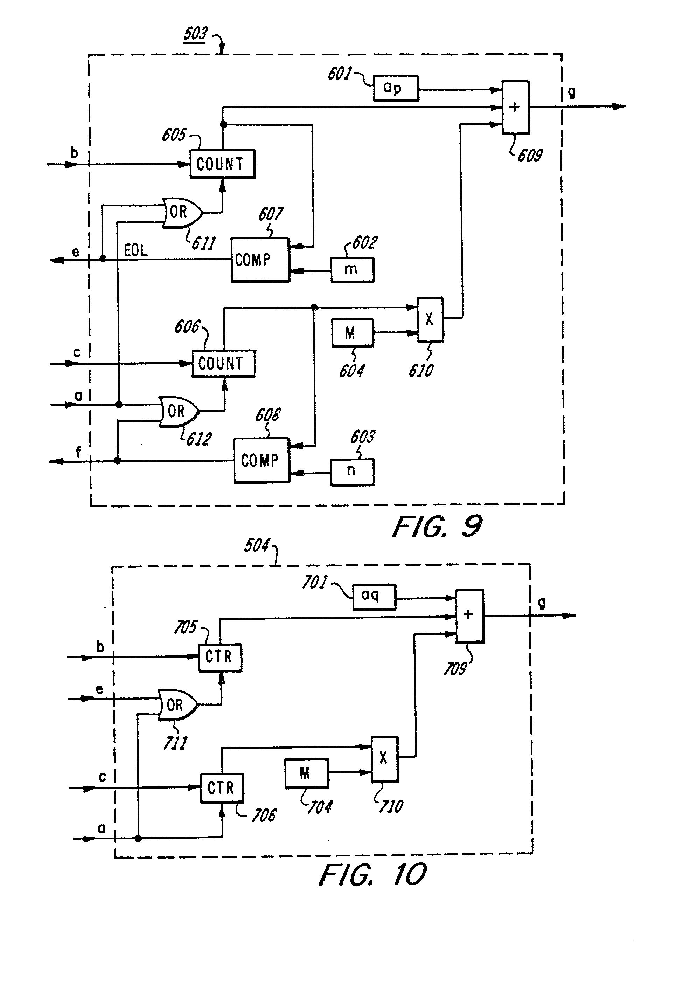

Figure 8 shows the above relations. As can be seen from the figure, it is required to divide into smaller increments the value of x in the vicinity of 1. If the value of x is set at an equal pitch and, if the $\alpha$ is set at an equal pitch, the magnifying ratio can be set only coarsely as the value of x increases. The values for x and $\alpha$ have to be determined taking the above points into consideration.

Since the magnifying ratio x is determined by itself within a certain range in the usual state of use, it is convenient to determine the correction coefficient based thereon. Assuming, for example, that x is in the range below 4 and the ratio may be varied at a pitch of about 0.2, it can be seen that minimum pitch for the correction coefficient $\alpha$ can be satisfied with a value of about 0.05. Then, the following description is to be made for the case where 18 ratios are provided as $\alpha$ = 0.05, 0.10, ..... 0.90 and 0.95.

The values for $\alpha$ used in the diminishing process are 0.05 to 0.95 and the value for $\alpha$ used as the correction coefficient in the magnification is in the range of 0.5 to 0.95. As described later, the process provides more ratios for the range of $\alpha$ = 0.05 - 0.5 and less for the range of $\alpha$ = 0.5 - 0.95. Specifically, if the process is possible, for example, with respect to $\alpha$ = 0.05, the process for $\alpha$ = 1 - 0.05 = 0.95 is also possible. Accordingly, only the process for $\alpha$ = 0.05 - 0.5 is described herein.

The values for selected $\alpha$ are at first expressed by the integer ratio A : B as follows:

| | |
|---|---|
| 0.05 ⟶ 20 : 1 | 0.50 ⟶ 10 : 3 |
| 0.10 ⟶ 10 : 1 | 0.35 ⟶ 20 : 7 |
| 0.15 ⟶ 20 : 3 | 0.40 ⟶ 5 : 2 |
| 0.20 ⟶ 5 : 1 | 0.45 ⟶ 20 : 9 |
| 0.25 ⟶ 4 : 1 | 0.50 ⟶ 2 : 1 |

Each of the integer ratios means that a B bit is selected from the 1-dimensionally arranged data for each A bit, only the selected data can be taken out for the sampling process and the selected data can be removed in the thinning process. Specifically, for the ratio (4 : 1), any one bit of a - d is selected from 1-dimensionally arranged 4 bits : a - d in the sampling process and any of abc, abd, acd and bcd is selected while removing 1 bit in the thinning process, and the selected data are output.

Then, the following patterns A and B are provided for the respective values of $\alpha$. Each of the patterns samples and takes out data in the position "1" if $\alpha$ is below 0.5 and, on the contrary, to thin and remove the data in that position if $\alpha$ is above 0.5. The symbol $\ell$ represents the number of "0"s present between two "1" bits adjacent to each other when the two patterns are arranged in the 1-dimensional arrangement. For example, $\ell_{AB}$ represents the number of "0"s present between two "1" bits when the pattern B is arranged next to the pattern A. Obviously, it is adapted such that the ratio at which "0"s and "l"s appear when the two patterns A and B are arranged at random is equal to the coefficient of correction. The arrangement of the patterns A and B at random can provide an advantage of preventing the generation of moire image interference.

d = 0.25, 0.75 (4 : 1)
A = 0100   $\ell$AA - $\ell$BB-3
B = 0010   $\ell$AB - 4, $\ell$BA - 2   } Average $\ell$ = 3

d = 0.20, 0.80 (5 : 1)
A = 00100   $\ell$AA - $\ell$BB - 4
B = 01000   $\ell$AB - 3, $\ell$BA - 5   } Average $\ell$ = 4

d = 0.40, 0.60 (5 : 2)
A = 01010   $\ell$AA - $\ell$BA - 2
B = 10010   $\ell$AB - $\ell$BB - 1   } Average $\ell$ = 15

d = 0.10, 0.90 (10 : 1)
A = 0000100000   $\ell$AA - $\ell$BB - 9
B = 0000010000   $\ell$AB - 10, $\ell$BA - 8   } Average $\ell$ = 9

d = 0.30, 0.70 (10 : 3)
A = 0100100100   $\ell$AA - $\ell$AB - 3
B = 0100010010   $\ell$BB - $\ell$BA - 2   } Average $\ell$ = 23

d = 0.05, 0.95 (20 : 1)
A = 00000000010000000000   $\ell$AA - $\ell$BB - 19
B = 00000000001000000000   $\ell$AB - 20, BA - 18   } Average = 19

d = 0.15, 0.85   (20:3)
A = 00010000001000000100   $\ell$AA - $\ell$BB - 5
B = 00100000010000001000   $\ell$AB - 4, $\ell$BA - 6   } Average = 5.5

d = 0.35, 0.65 (20 : 7)

$\quad$ A = 0100100101001001001001010 $\quad$ ∠AA - ∠BB - 2

$\quad$ B = 0100100100101001001010010 $\quad$ ∠AB - ∠BA - 2 $\quad\Big\}$ Average ∠1.875

d = 0.45, 0.55 (20 : 9)

$\quad$ A = 0101010100101010101010 $\quad$ ∠AA - ∠BB - ∠AB - ∠BA - 2

$\quad$ B = 0101010101001010101010 $\qquad\qquad$ Average 13

d = 0.50 (2 : 1)

$\quad$ A = 01 $\qquad\qquad$ ∠AA - ∠BB - 1

$\quad$ B = 10 $\qquad\qquad$ ∠AB - 0, ∠BA - 2 $\quad\Big\}$ Average 10

The procedure for the magnification by a factor of 2.22 is to be described as an example. Since $x = 2.22 = 3 \times \frac{2.22}{3} = 3 \times 0.74$, the correction coefficient $\alpha = 0.74$.

That is, magnification is effected by a factor of 3 and then the result is diminished by a factor of 0.74. Since an approximation is found as $\alpha = 0.74 \doteq 0.75$ and $\alpha = 0.75 = 15/20 = 3/4$, 1 bit may be thinned from 4 bits. The process for one direction will be shown as an example. Assume the patterns, A = 0100 and B = 0010, and that the thinning instruction AB is in the order of ABAB ........... . Assuming the image data as ....0011001110 ........ , it produces

$\quad$ AB ............. 0100001001000010010000100100000010 ....., and the data is magnified by a factor of 3 ........ 00000011111100000001111111111000 ........ .

$\quad$ Data magnified by the factor of 2.22 is ........ 0000011110000111111000 ........ . More exactly, in this example, the ratio is

$$\frac{23 \text{ bits}}{10 \text{ bits}} = 2.3$$

By performing the operation in the same manner in the other direction (including a method of thinning by a line unit and a method of thinning by a bit unit), a 2-dimensional magnifying process by the factor of a non-integer can be performed.

Figure 7 and succeeding figures will now be discussed.

Devices 503 and 534 of Figure 7 are address designation circuits for the address designation to the first and the second page memories respectively. The address designation circuit 503 is implemented as shown in Figure 9. As apparent from a comparison with Figure 4, the address designation circuit 503 of Figure 7 corresponds to the address designation circuit 31 of Figure 4, but adapted to output from the comparator 407.

In Figure 9, devices 601, 602, 603 and 604 are registers, 605 and 606 are counters, 607 and 608 are comparators, 609 is an adder, 610 is a multiplier and 611 and 612 are OR circuits. The contents stored in the registers 601, 602, 603 and 604 are ap, m, n and M respectively as in figure 4. The ap represents the address of the information corresponding to the image element P, the uppermost left corner element of the extraction region A as shown in Figure 6, m represents the number of image elements per row on the original extraction region A, n represents the number of image elements arranged in the direction of the arrow E in the extraction region A and M represents the number of image elements per original image row over the entire page.

Accordingly, the above address designation circuit 503, as shown in Figure 9, performs the following operation. Upon supply of a start pulse signal as in Figure 9, counters 605 and 606 are initialized to 0. Consequently, the output of the multiplier 610 is also 0 and the output g from the adder 609 is equal to that of the register 601, that is, ap. A location is, therefore, designated that stores therein one word of information corresponding to the image element P in the extraction region A. Since the counter 605 counts and outputs the number of input pulses on every clock pulse b, the address designated by the output of the adder 609 increments. Upon input of the mth clock pulse, since the counted value of the counter 605 coincides with that of the register 602, the comparator 607 generates an output. This pulse signal is referred to as the EOL signal (end of line) hereinafter and indicates that the address designation required for reading out the information corresponding to the m number of image elements arranged in the direction of the main scanning in the extraction region A (the direction shown by the arrow H in Figure 6) from the page memory 1 has been completed.

The EOL signal e is an output, and also is supplied to the input of the OR circuit 611 to reset the counter 605 to 0. If signal c is not supplied at the generation of the EOL signal, since the counter 606 and the multiplier 610 do not change their indication contents, the address designated by the output signal g is ap. Accordingly, the addresses designated thereafter by the clock pulse b are the same as that corresponding to the image element row read out immediately before.

If the input signal c is supplied together with the generation of the EOL signal, the counter 606 increments, whereby the multiplier 610 changes its indication content from 0 to M. That is, the multiplier 610 increases its indication value by M on each increase of the counting value of the counter 606. The address designated then by the output signal g is therefore ap+M, which is the address of the location for the first element of the next row. Thereafter, by the supply of the clock pulse b to the counter 605, the designated address changes as ap+M+1, ap+M+2, ...., which identifies the information corresponding to this second image element row.

As has been clarified with the foregoing description, if the pulse signal c is supplied upon generation of the EOL signal from the comparator 607, the next image row is specified and, if no signal c is supplied, the location storing the information corresponding to the next image element for the row is specified.

These operations are then repeated for all rows.

Finally, upon supply of the nth pulse signal to the counter 606, the value counted on the counter 606 coincides with the value set on the register 603 and the comparator 608 generates an output. This pulse signal on line f of Figure 9 is also referred to as an END signal, which indicates that the reading for the image information corresponding to the extraction region A from the page memory has been completed.

The address designation circuit 504 of Figure 7 is constituted as shown in Figure 10. As apparent in Figure7, the circuit 504 corresponds to the address designation circuit 503 in Figure 9, from which the registers 602 and 603 and comparators 607 and 608 are removed and thus in which no output signals e and f are present. Figure 10 devices 701 and 704 are registers in which the values for ap and M are stored. Devices 705 and 706 are counters, device 709 is an adder, device 710 is a multiplier and device 711 is an OR circuit.

Upon supply of a start pulse signal a, the counters 705 and 706 are initialized to 0. Accordingly, the output of the multiplier 710 is also 0 and the adder 709 output is equal to that in register 701, aq, which represents the address of the location storing the image element Q in the uppermost left corner of the copy region B shown in Figure 6. This value forms the address designation signal g that is output initially. Then, as the counter 705 counts the number of input clock pulses b, the output signal g increases successively to aq+1, aq+2 .... as in Figure 9. This continues until an EOL signal e is supplied to the OR gate 711 and the counter 705 is initialized again to 0.

If a pulse signal c is supplied simultaneously at that time, the content of the counter 706 changes from 0 to 1 and the content of the multiplier 710 changes from 0 to M based on the above change. M again represents the number of image elements per row on the entire page. Accordingly, the address designated by the output signal g is aq+M which is the address to be written with the instant word of information in the next row. The addresses $aq+M_1+1$, $aq+M_1+2$, ..... are successively designated in accordance with the arrival of the clock pulses b and correspond to the image elements in the next row. By repeating the foregoing operation thereafter, designation of the locations corresponding to the entire copy region is performed.

The image processing means shown by the block diagram in Figure 7 is adapted to extract only the image information corresponding to the extraction region from the first page memory 1, to magnify this image and to store it into the second page memory 2 at the address corresponding to the copy region. The image corresponding to the extraction region is first magnified by the factor of X and then diminished by the factor of $\alpha$ to obtain the image magnified by the factor of x.

In Figure 7, upon sending out the start pulse 302 instructing the start of the operation, the address instruction circuits 503 and 504 designate addresses ap and aq respectively as described, and frequency dividers 510, 511, 512 and 513 are reset to their initial state of 0. Each of the frequency dividers counts up the pulses input hereinafter, returns to its initial state simultaneously with the input of the $X_{th}$, $kX_{th}$ and $k_{th}$ pulses respectively and then repeats the above operations. It is implemented such that the frequency divider 511 outputs a pulse signal simultaneously with the input of a first clock pulse, and the other frequency dividers 512, 513 and 514 output pulses simultaneously with the input of $kX_{th}$, $X_{th}$ and $k_{th}$ pulses respectively.

The start signal 302 is also supplied by way of the OR circuit 514 and the delay circuit 522 to a shift register 505 to input a word of information of the first page memory 1 to the shift register 505. This shift register 505 is a parallel-in-serial-out k bit shift register and the information input is one word (k bits) of information designated by the address instruction circuit 503. In this case, clock pulses 301 are sent out thereafter from the control circuit 523. The clock pulses 301 are supplied to the input of the counter 510, from which a pulse train divided into 1/X (hereinafter referred to as a shift signal) 305 is supplied to the shift register 505 and the flip-flop 507.

On every supply of the shift signal 305, the shift register 505 sends out the information image stored therein bit by bit to the flip-flop 507 which changes the state of an output, Q, depending on the input image information to maintain the state of the output Q until the next shift signal 305 is supplied. The image information indicated on the output Q of the flip-flop 507 is coupled to the shift register 506 which is a serial-in-parallel-out k bit shift register and which inputs on every supply of a pulse signal (hereinafter referred to as a shift signal) 309 the state indicated on the output Q of the flip-flop 507. The shift signal 309 is prepared by delaying the clock pulse 301 through a delay circuit 519 and further gating it through AND circuits 517 and 518. The output from the shift register 508 is supplied to the other input of the AND circuit 517 and the output of the shift register 509 is supplied to the other input of the AND circuit 518. The shift registers 508 and 509 are previously stored with diminishing information corresponding to the correction coefficient $\alpha$.

The contents of the above two shift registers 508 and 509 may be the same or different. The diminishing information comprises patterns (2 or more) which determine the correction coefficient $\alpha$ for sampling or thinning and arranging them at random.

Shift registers 508 and 509 are implemented so that the clock or EOL pulse signals are circulated in these shift registers. It is therefore preferred to set the capacity of the shift registers great enough so that the regularity of the sampling or thinning resulting from the circulation is satisfactory. The clock pulse 301 sent out from the control circuit 523 is supplied by way of the delay circuit 519, the AND circuit 517 and the shift register 508. The pulse train 308 output from the AND circuit 517 is equal to that prepared by sampling or thinning the clock pulse 301 in accordance with the correction coefficient. The EOL signal sent out from the address instruction circuit 503 is supplied to the shift register 509, which changes its output state on every supply of the above EOL signal depending on the diminishing information previously stored therein.

Accordingly, if the output state of the shift register 509 is low the pulse train 308 is not sent out from the AND circuit 518 and the image information indicated on the output gate Q of the flip-flop 507 is not supplied to the input of the shift register 506. If the output state of the shift register 509 is high, the pulse train 308 forms a shift signal 309 by way of the AND circuit 518 to supply the signal on the output Q from the flip-flop 507 as the image information to the input of the shift register 506.

As above, the EOL signal supplied to the shift register 509 shows that the address designation for reading out the information corresponding to the m number of image elements arranged in the main scanning direction in the extraction region A from the first page memory 1 has been completed. Therefore, the output state of the shift register 509 does not change during the processing of the information corresponding to one image element row in the extraction region.

Accordingly, the number of pulses of the shift signal 309 supplied to the shift register 506 is equal to that prepared by multiplying the number of pulses of the shift signal 305 supplied to the shift register 505 and the flip-flop 507 by the factor of X and sampling or thinning in accordance with the diminishing information corresponding to the correction coefficient $\alpha$. Consequently, the information to be supplied to the input shift register 506 represents the image prepared by magnifying the image corresponding to the information read out from the first page memory 1 in the main scanning direction by the factor of $x = (X \cdot \alpha )$.

The image information stored in the shift register 506 is transferred by word units (k bits/unit) to the second page memory 2 and stored at the address designated by the address instruction circuit 504. This is performed by the generation of a pulse signal from the counter 513 that counts up the number of pulses of the shift signal 309 on every counting of k pulses to put the page memory 2 into a state enabled for writing (write mode), and the pulse signal generated from the counter 513 is supplied by way of the delay circuit 520 as an input signal b to the address designation circuit 504 causing the address designation circuit 504 to designate the address to which the writing is performed next. - .

On the other hand, the address designation circuit 503 designates an address corresponding to the information to be read out next upon supply of the pulse signal 304 sent out from the frequency divider 511 as the input signal b. As above, the frequency divider 511 is adapted to count the clock pulse and generate the pulse signal 304 on every counting of a kX number of pulses. Consequently, the address designation circuit 503 changes the address on every counting of the kX number of pulses. The pulse signal 304 is also supplied by way of the OR circuit 514 and the delay circuit 522 to the shift register 505 to input the informaton word corresponding to the address designated by the address instruction circuit 503 to the shift register 505. The process for the information storage in the shift register 505 is performed as above.

When all of the information corresponding to the first image element row in the main scanning direction of the extraction region A, as shown in Figure 6, has been read out in accordance with the procedures above described, the EOL signal is sent out from the address designation circuit 503. The EOL signal is supplied to the OR circuit 611 of the address designation circuit 503 and the frequency divider 512, and the output of the frequency divider 512 is supplied as the signal c to the counter 606 of the address designation circuit 503. As a result, the address designation circuit 503 reads out the m number of image elements arranged in the main scanning direction in the extraction region A, shown in Figure 6, each x times (that is, the original image is magnified by the factor of x in the main scanning direction). Consequently, if the EOL signal is not the Xth signal, the image element row corresponding to the information read out immediately before is read out, if it is the Xth signal, the image element row is advanced from the above image element row by one image element in the auxiliary scanning direction, and read out. Further, the EOL signal is applied by way of the OR circuit 515 to the frequency divider 513 putting it into an initial set state. It is also supplied as an input signal e, and by way of the delay circuit 521 and the AND circuit 516, as an input signal c to the address designation circuit 504. The output from the shift register 509 is supplied to the other input of the AND circuit 516. As already described, the shift register 509 changes its output state in accordance with the correction coefficient $\mathcal{L}$ stored therein on every supply of the EOL signal.

Consequently, if the shift register 509 takes a high output state simultaneously with the supply of the EOL signal to the shift register 509, the EOL signal is supplied as the input signal c to the address designation circuit 504. The address designated thereafter by the address designation circuit 504 therefore corresponds to the image element row advanced from the image element row written immediately before by one image element in the auxiliary scanning direction. Since the input signal c is not supplied if the shift register 509 takes a low output state, the address designation circuit 504 is set so that the image element row written immediately before is designated again. However, since the AND circuit 506 also stops the sending of the shift signal 309, the information corresponding to one image element row read out from the page memory 1 thereafter is not written into the page memory 2. Specifically, the information corresponding to each of the image element rows arranged in the main scanning direction in the extraction region A is read out each by X times and the line therein corresponding to the correction coefficient $\mathcal{L}$ is subjected to the sampling or thinning, whereby the information image corresponding to the extraction region A is magnified by the factor of $x = X \cdot \mathcal{L}$ in the auxiliary scanning direction and the sampling or thinning for the image elements is conducted in accordance with the diminishing information corresponding to the correction coefficient $\mathcal{L}$ with respect to each of the image element rows in the main scanning lines constituting the image magnified by the factor of x. It will now be apparent that the information representing the image prepared by magnifying the image corresponding to the extraction region on the original image by the factor of x is stored at the address in the copy region of the second page memory 2.

The completion of the above procedures is shown by the END signal f sent out from the address designation circuit 503. The detailed explanation for the END signal f has already been made and when the End signal f is sent to the control circuit 523, the control circuit stops the issue of the clock pulse 301, whereby the series of operations described so far is completed.

While the explanation has been made for the case where the magnification rate is greater than 1, it will be apparent that the sampling or thinning operation can be performed by using the correction coefficient $\mathcal{L}$ directly on the original image by setting $[x] = 0.$

As already described, the embodiment in Figure 7 shows an example of the structure for the image processing means which enables a transcribing and magnifying operation in which the position and the size of the extraction region are determined by the values set on the three registers 601-603 and in the address designation circuit 503. The position of the extraction region A on the original image D shown in Figure 6 is represented by the image element P and the size of the extraction region A is given by the length $\ell_1$ in the main scanning direction and the length $\ell_2$ along the auxiliary scanning direction, the transcribed portion corresponding thereto requires the contents ap, m and n in the registers 601, 602 and 603 in the block diagram of the address designation circuit 503 shown in Figure 9.

In addition, the position of the copy region B on the copy image C can also be represented by the image element Q and the position of the image element Q is determined by the value indicated on the register 701 in the block diagram of the address designation circuit 504 for the second page memory shown in Figure 10. Accordingly, by the provision of means for supplying a numerical value corresponding to the content of the required operation to the input of the above registers, that is, a region designation means, the position and the size of the extraction region on the original image and the position of the copy region on the copy image can be set for each of the operations.

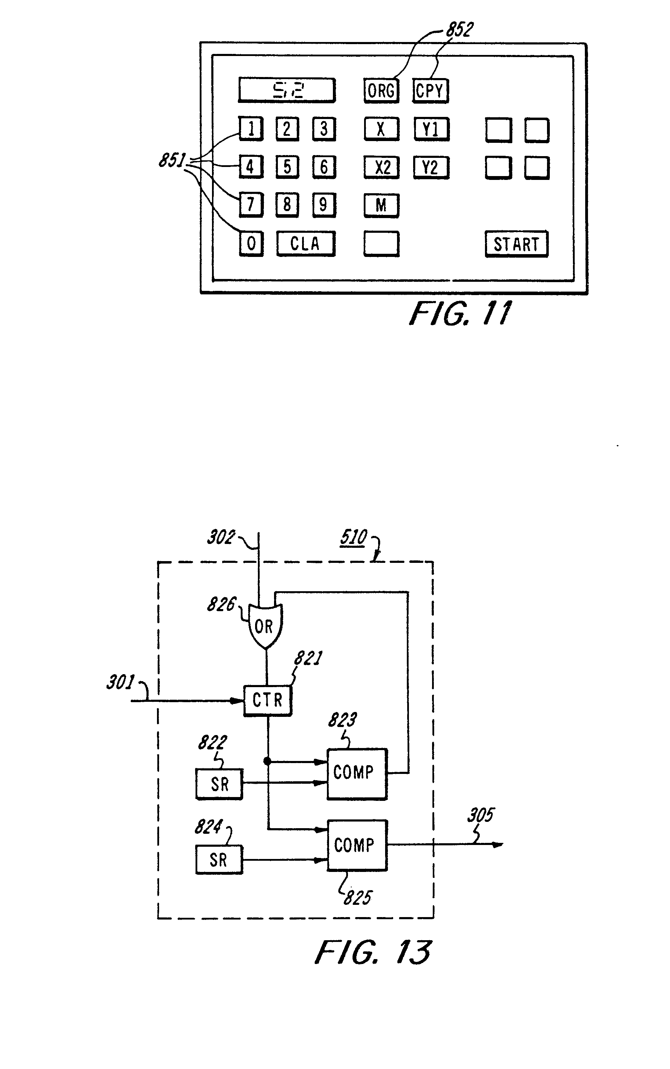

The operator console schematically shown in Figure 11 constitutes a part of such region designation means. An operator can key-input the numerical value corresponding to a desired operation by way of a set of digit keys 851 arranged on the operation console and further input instruction words by way of auxiliary keys 852.

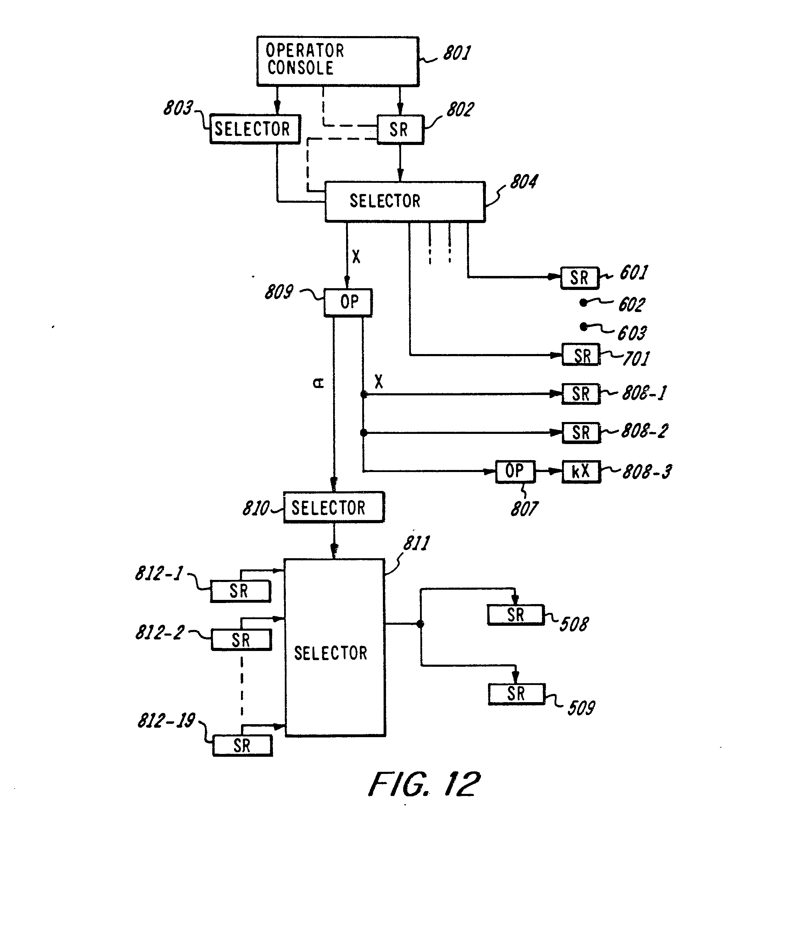

Figure 12 shows the construction of the above region designation means in a block diagram. In the diagram, are shown an operator console 801, registers 802, 601, 602, 603, 701, 808-1, 808-2 and 808-3, selector control circuits 803 and 810, selectors 804 and 811, operation circuits 807 and 809, shift registers $812_{1-19}$, 508 and 509. The operator key-inputs the numerical information to the register 802 by the manipulation of the digit keys 851 on the operator console, and inputs instruction words by means of the auxiliary keys 852. The selector control circuit 803 selects the destination of the numerical information stored in the register 802 depending on the instruction and, based on the result, controls the selector 804. Each of the registers 601, 602, 603 and 701 is as shown in Figure 9 and Figure 10. Accordingly, if any register 601, 602, 603 and 701 is designated, the numerical information of the register 802 is input to the designated register.

Figure 12 also shows the construction of a magnifying ratio designation means which enables the designation of a magnification ratio for every operation where the magnifying process is used. If the information input to the register 802 by way of the operator console 801 expresses a magnifying factor, the selector control circuit 803 controls the selector 804 so that the numerical information in the register 802 is transferred to the operation circuit 809. The operation circuit 809 calculates, with respect to the numerical information x, the numerical values X and $\alpha$ represented by:

$$X = [x] + 1$$
$$\alpha = \frac{x}{X}$$

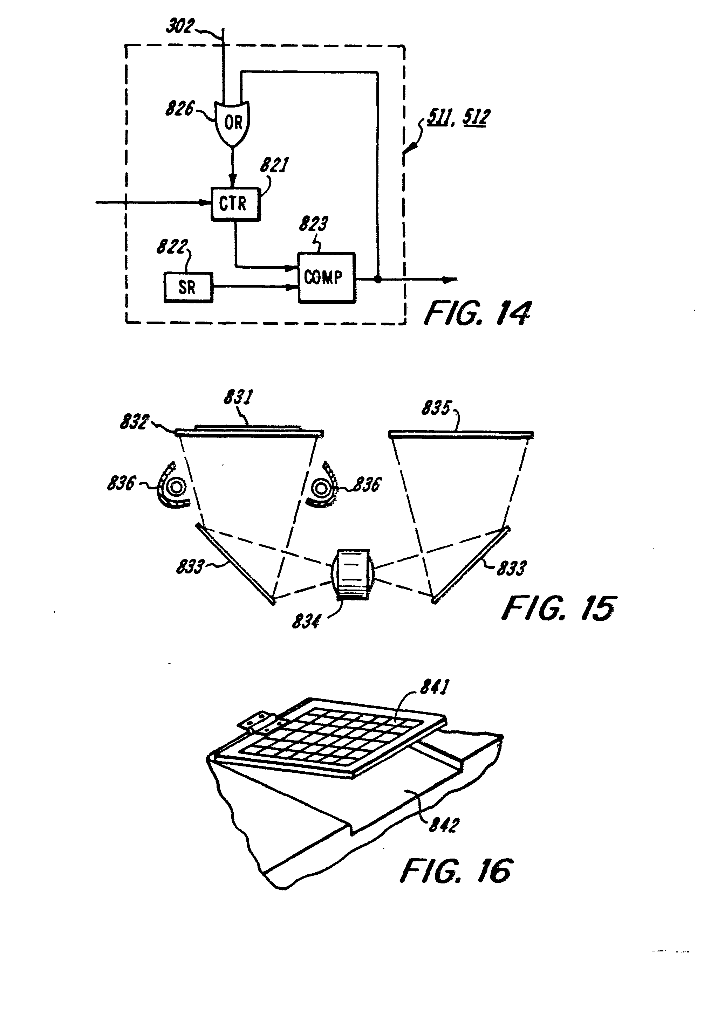

The X obtained as the result is transferred to the register 808-1 and 808-2 and the multiplication circuit 807. The multiplication circuit 807 determines the product kX for the numerical value X transferred and k, which is inputted to the register 808-3. Each of the above registers 808-1, 808-2 and 808-3 is provided inside of each of the frequency dividers 510, 511 and 512 in Figure 7. Figure 13 is a block diagram for the frequency divider 510, and Figure 14 is a block diagram for the frequency dividers 511 and 512. In the diagrams those portions having the same structure and function carry the same references.

Device 821 is a counter for counting the number of pulses of the supplied pulse train, 822 is a register, and 823 is a comparator which compares the counting value of the counter 821 and the content indicated on the register 822 and issues a pulse signal when both of the values coincide to put the counter 821 again to its initial set state. 824 is a register having a constant 1 as its memory content and 825 as a comparator. The above devices 824 and 825 are not provided in the frequency dividers 511 and 512. This is because the frequency divider 510 is different from frequency dividers 511 and 512 and sends out a pulse signal externally upon input of a first pulse.

The other numerical information calculated in the operation circuit 809 (correction coefficient) is transferred to the selector control circuit 810, where the diminishing ratio nearest to the calculated numerical information $\alpha$ is selected from the ratios $\alpha 1$..........$\alpha 19$ previously prepared and the selector 811 is controlled in accordance with the selection results.

Diminishing information representing 19 correction coefficients (diminishing ratios) prepared, for example, by dividing the distance between 0.05 and 1.0 with a 0.05 pitch are previously stored in the shift register $812_{1-19}$ and the output from each of the shift registers 812 is input to the selector 811. The selector 811 selects the output from the shift register that stores the diminishing information $\alpha$ k nearest the calculated numerical value in accordance with the instruction of the selector control circuit 810. Consequently, the diminishing information expressing the diminishing ratio $\alpha$ k is input to the shift registers 508 and 509. It will be apparent that the magnifying ratio can be selected for each portion by the above ratio designation means, from the fact that only the frequency dividers 510, 511 and 512 and the shift registers 508 and 509 are relevant to the magnifying ratio among each of the components shown in the block diagram of Figure 7.

Now by the provision of the region designation means and the ratio designation means explained so far, the designation for the extraction region and the copy region, as well as the designation of the magnifying ratio, where the magnifying process is accomplished, are enabled in accordance with the selected instructions, the operator performing these operations by manipulating the digit keys and the auxiliary keys on the console.

The efficiency in the operation can significantly be improved if the operator can observe the original image and the extraction region on the original image simultaneously and can rapidly recognize the numerical value to be input (by way of the digit keys) based on the result of the observation. This is true for the original and the copy.

Figure 15 and Figure 16 show the schematic construction of an original image display means and a copy image display means respectively that enables the foregoing observation.

In Figure 15, an original document 831 carries an image on its lower surface and is placed on a platen glass 832. Mirror 833 lens 834 and exposure lamp 835 comprise an image projection means. The original image of the document 831 is projected on screen 835. It is convenient to attach ruled lines and numerical values on the screen 835 so that the position on each point of the projected image can be read out directly in coordinate form. Thus, the operator can read the points necessary for designating the position and the size of the extraction region on the original image projected over the screen, that is, the coordinates for the two points P and R shown in Figure 2 and Figure 6, and key-input the numerical values by way of the digit keys and the auxiliary keys. The key-input numerical value is not the value that is directly input to the registers 601, 603, 603 and 701 in figure 12. A calculation circuit is required for calculating the value to be indicated on the registers from the numerical value showing the input coordinates. ·

The calculation circuit can be provided at the site of the register 802 in Figure 12. The calculation circuit may comprise a plurality of registers and the numerical values input by the digit keys are temporarily stored in the register designated by way of the auxiliary keys in the calculation circuit. If all of the required numerical information is input into the registers upon starting of the calculation, the calculation circuit calculates the numerical values to be input to the registers 601, 602 and 603 and inputs the calculation result into each of the registers. In this manner, numerical values ap, m and n expressing the position and the size of the extraction region are recorded in each of the registers 601 and 603.

The designation of the transcription region is input to the above registers in a similar operation. Specifically, the numerical information regarding the coordinates of point Q, of Figure 6, and the numerical value aq are obtained from the console and stored in register 701. The designation means for the transcription position on the copy image may, however, be constituted as shown in Figure 16. The copy image display means comprises a coordinate display plate 841 which is a transparent plate with ruled lines and numerical values, and a mounting bed 842. A copy paper (not shown) is put between them and is adapted such that the position of the transcription region, that is, the point of the coordinate corresponding to the point Q in Figure 2 and Figure 6 can be read by way of the coordinate display plate 841 by the ruled lines and the numerical values attached thereto.

The equation for the calculation executed in the above calculation circuit depends on the choice of coordinates. For example, where the points situating the upper left of the original image and the copy image shown in Figure 2 and Figure 6 are taken as original points and graduation is made by the numerical value (integer) at a distance k number of image elements as the minimum (nominal) unit both in the direction of the main scanning (arrow H) and the auxiliary scanning (arrow E); ap, m and n relative to two sets of numerical values $(x_1, y_2)$ and $(x_2, y_2)$ input as the coordinates for the points P and R are calculated respectively by the following equations:

$$ap = x_1 + kMy_1$$

$$m = x_2 - x_1$$

$$n = k(y_2 - y_1)$$

For one set of numerical values $(x_3, y_3)$ input as the coordinates for the point Q, aq is given by the equation:

$$aq = x_3 + kMy_3$$

As apparent from the foregoing descriptions, according to this invention, the image in any extraction region on an original image can be transcribed as it is to an optional designated position on a copy, and the image can be magnified and diminished upon transcription. Furthermore, magnification and reduction of the image at a desired ratio are possible by the provision of a relatively small number of correction coefficients. The generation of Moire image interference that tends to result in the magnified or diminished image can be suppressed effectively be adapting so that no regularity is formed in the correction coefficient.

<u>CLAIMS</u>:

1.      An image transcribing apparatus including an image input
portion (4) which scans an original to produce electrical image
elements, each element comprising one or a plurality of binary
bits, an image processing portion (3) for processing the image
elements, and a recording portion (5) for reproducing the processed
image elements on a copy, the apparatus being characterised by a
first memory (1) for storing the image elements from the input
portion (4) and a second memory (2) for storing the elements to
be reproduced by the recording portion, the image processing portion
(3) being arranged to transfer the image elements stored in the
first memory (1), at locations corresponding to a region of the
original to be extracted, into the second memory (2) at locations
corresponding to a transcribing region assigned for the reproduced
image on the copy.

2.      The apparatus of Claim 1 wherein said image processing portion (3)
further comprises;
        an input document platen (832) for displaying to the operator
the co-ordinates of the original image,
        a display plate (841) for displaying to the operator the co-ordinates
of the copy on which the output image will be printed, and
        a keyboard (851) for the operator to use in communicating with
the remainder of said image processing portion (3) to specify the original and
transcribed image portions.

3.      The apparatus of Claim 2 wherein said image processing portion
(3) further comprises;
        a first addressing circuit (503) responsive to said keyboard (851)
output for generating the addresses of the location of the first memory (1)
which contains the selected image portion, and
        a second addressing circuit (504) responsive to said keyboard (851)
output for generating the addresses of the locations of the second memory
(2) which contains the image to be printed.

4.      The apparatus of Claim 3 wherein said image processing portion
(3) further comprises;

a magnifying circuit (Figure 7) for converting the image elements
representing the image extracted from the original and stored in said first
memory means (1) into a second set of image elements which is magnified
by a natural number equal to the sum of the integer part of a desired magnifying ratio and a predetermined natural number, or for reducing the size
of the magnified image by rejecting a fraction of image elements, and for
coupling the magnified or reduced image to the second memory means (2).

IMAGE
INPUT
PORTION

FIRST
PAGE
MEMORY

IMAGE
PROCESSING
PORTION

SECOND
PAGE
MEMORY

RECORDING
PORTION

*FIG. 1*

*FIG. 2*

FIG. 3

FIG. 5

FIG. 6

FIG. 4

$$\alpha = \frac{X}{(X)+1}$$

FIG. 8

FIG. 7

4 / 8

0009378

0009378

FIG. 9

FIG. 10

FIG. 11

FIG. 13

FIG. 12

302

826 — OR

821

CTR

822

SR

823

COMP

511, 512

FIG. 14

831
832

835

836

836

833

833

834

FIG. 15

841

842

FIG. 16

**European Patent Office**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | G 06 F 15/20<br>B 41 B 27/20 |
| | <u>US - A - 4 052 699</u> (IBM)<br><br>* Column 2, lines 52-54; column 3, lines 38-68; figures 1,2 *<br><br>-- | 1 | |
| | <u>US - A - 3 976 982</u> (IBM)<br><br>* Column 3, line 55 - column 5, line 35; figure 1 *<br><br>---- | 1,4 | |

**TECHNICAL FIELDS SEARCHED (Int.Cl. ³)**

G 06 F 15/20
B 41 B 27/18
B 41 B 27/20

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-11-1979 | BURGAUD |

EPO Form 1503.1   06.78